(19) Europäisches Patentamt

European Patent Office

Office européen des brevets

(11) **EP 1 231 489 A1**

(12) **DEMANDE DE BREVET EUROPEEN**

(43) Date de publication:
**14.08.2002 Bulletin 2002/33**

(51) Int Cl.7: **G02B 6/26**, G02F 1/1333,
G02F 1/35

(21) Numéro de dépôt: **02364009.7**

(22) Date de dépôt: **13.02.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **13.02.2001 FR 0101967**

(71) Demandeur: **GET / ENST Bretagne
29285 Brest Cédex (FR)**

(72) Inventeurs:
• **De Bougrenet, Jean-Louis
29290 Saint-Ronan (FR)**
• **Dupont, Laurent
29280 Plouzane (FR)**

• **Chanclou, Philippe
22700 Louannec (FR)**

(74) Mandataire: **Vidon, Patrice
Cabinet Patrice Vidon
Le Nobel (Bât. A)
Technopôle Atalante
2, allée Antoine Becquerel
BP 90333
35703 Rennes Cedex 7 (FR)**

Remarques:
Une requête d'addition de dessins manquants à été présentée conformément à la règle 88 CBE. Il sera statué sur cette requête au cours de la procédure engagée devant la division d'examen (Directives relatives à l'examen pratiqué à l'OEB, A-V, 3.).

(54) **Procédé de fabrication d'un dispositif d'atténuation d'un signal véhiculé par fibre optique, dispositif d'atténuation, système d'atténuation et applications correspondants**

(57) L'invention concerne un procédé de fabrication d'un dispositif d'atténuation d'un signal véhiculé par fibre optique sous la forme d'un signal lumineux, et les dispositifs correspondants, ledit procédé comprenant les étapes suivantes :

- expansion du coeur optique d'une première et d'une seconde fibres monomodes ;
- montage en vis-à-vis desdites première et seconde fibres, dans un capillaire contenant un cristal liquide ;

- polymérisation dudit cristal liquide, pour réaliser un élément d'atténuation.

**EP 1 231 489 A1**

**Description**

Le domaine de l'invention est celui de la transmission de signaux par fibre optique. Plus précisément, l'invention concerne la fabrication des dispositifs d'atténuation d'un signal véhiculé par fibre optique, et les dispositifs correspondants.

Les atténuateurs optiques sont des composants clefs dans le déploiement actuel de systèmes de transmission par fibres optiques. De tels atténuateurs sont utilisés à des fins multiples, telles que par exemple :

- l'adaptation de la puissance optique d'un signal à la gamme de sensibilité en puissance de récepteurs optiques ;
- l'ajustement des niveaux de sortie des amplificateurs optiques de type EDFA (en anglais "Erbium Doped Fibre Amplifier" pour "amplificateur à fibre dopée à l'erbium") ;
- l'égalisation de la puissance entre différents canaux WDM (en anglais "Wavelength-Division Multiplexing" pour "multiplexage par répartition en longueur d'onde") ;
- le test des performances générales de systèmes optiques dans des conditions de puissance optique variables.

On a déjà mis au point différents technologies permettant de concevoir des atténuateurs optiques variables (en anglais VOA pour "Variable Optical Attenuator"), exploitant différents effets physiques prenant naissance dans les matériaux.

Ainsi, on a pensé à utiliser l'effet thermo-optique, comme dans la fibre VOA de la société MOEC (marque déposée), ou des matériaux à cristaux liquides comme dans les produits E-tek JDS Uniphase (marque déposée).

Ces atténuateurs optiques ont pour inconvénients, pour le premier, de présenter une consommation de puissance importante, et pour le second, de nécessité l'utilisation d'un dispositif de diversité de polarisation, et d'une régulation très précise en température. Ces multiples problèmes, présentés notamment dans les documents de brevet US 6 130 984 intitulé "Miniature variable optical attenuator" (en français, "atténuateur optique variable miniature") de Shen, Xu et Pan, et US 5 727 109 intitulé "Optical attenuator with low polarisation mode dispersion" (en français, "atténuateur optique à faible dispersion de modes de polarisation") de Pan et Shih, conduisent à une augmentation sensible du prix de revient de ces atténuateurs optiques variables.

Plus récemment, une nouvelle technologie, basée sur l'utilisation de MEMS (pour "Micro-Electro-Mechanical Systems" en anglais, "systèmes micro-électro-mécaniques" en français), a été utilisée avec succès par la société Sercalo Microtechnology (marque déposée). En effet, ces composants ont pour avantage de présenter une très grande dynamique d'atténuation (de l'ordre de 50dB), d'être insensibles à la polarisation, et d'être très bas coût, typiquement de l'ordre de 200 US $.

Cependant, une telle technologie présente des inconvénients liés au problème d'usure mécanique des MEMS.

On a encore envisagé de concevoir des atténuateurs optiques au moyen de diffuseurs aléatoires dont la biréfringence peut être commandée par l'application d'un champ électrique, de façon à moduler la courbe de transmission. De tels composants sont connus pour être de bons atténuateurs optiques, sont a priori insensibles à la polarisation, et présentent une faible consommation.

On connaît notamment deux solutions technologiques particulières permettant de réaliser des VOAs à partir de diffuseurs aléatoires.

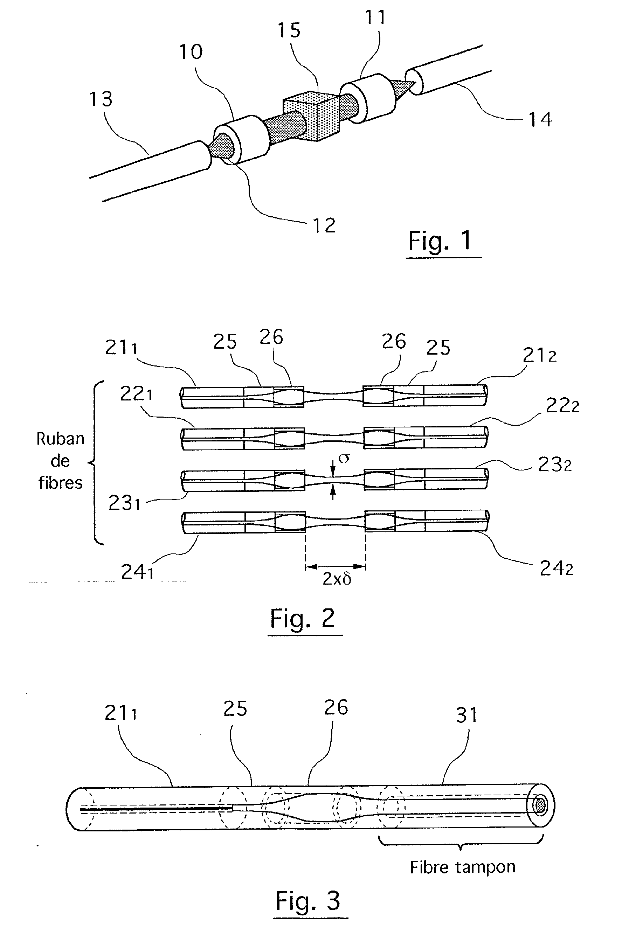

La première solution est par exemple décrite dans le document de brevet US 4 364 639 par Sinclair, Straus et Garel-Jones, intitulée "Variable Attenuation Electro-Optic Device" (en français "Dispositif électro-optique d'atténuation variable"). Elle met en oeuvre un cristal liquide dopé de type MBBA/EBBA (N - (p' - methoxybenzilidene) - p - n - butilaniline / N - (p' - ethoxybenzilidene) - p - n - butilaniline), confiné entre deux lames de verre, comme décrit dans le document "Dynamic scattering : a new electro-optic effect in certain classes of nematic LC" (en français, "Diffusion dynamique : un nouvel effet électro-optique dans certaines classes de cristaux liquides nématiques") par Heilmer et al., Proc. SPIE Vol. MS 46, pp 289-298, 1992. Dans un tel dispositif, illustré en figure 1, le faisceau optique est auto-collimaté au moyen de deux micro lentilles collimatrices de type selfocs 10 et 11. Le signal lumineux véhiculé par les fibres optiques monomodes 13 et 14 est atténué lorsqu'il traverse le dispositif à base de cristal liquide 15. Les conditions opératoires consistent à appliquer une tension alternative parallèlement à la direction de propagation du faisceau optique 12.

Un inconvénient de cette technique de l'art antérieur est que l'effet d'atténuation obtenu est faible, et il est par conséquent nécessaire d'appliquer aux bornes du dispositif des tensions électriques élevées, pour obtenir une atténuation suffisante du signal.

Un autre inconvénient de cette technique de l'art antérieur est que, du fait de la petite taille du coeur des fibres monomodes (en anglais SMF pour "Single Mode Fibre"), les interconnexions ont de faibles tolérances d'alignement, ce qui rend délicate la fabrication d'un tel atténuateur optique. L'introduction des lentilles 10 et 11 accroît encore la complexité d'un tel assemblage, et par voie de conséquence rend l'ensemble plus coûteux. Une telle solution présente notamment des pertes d'insertion et de connectique importantes.

La deuxième solution consiste à utiliser un mélange de polymère et de cristal liquide (en anglais PDLC pour "Polymer Dispersed Liquid Crystal"), du type décrit dans le document "Polymer Encapsulated Nematic LC" (en français "Cristal liquide nématique encapsulé dans un polymère"), Proc. SPIE Vol. MS 46, pp 510-512, 1992 par J. L. Fergason. Un tel composé permet de réaliser des atténuateurs optiques variables à forte dynamique. On a par ailleurs proposé, notamment dans le document "Polarisation independent optical fibre modulator by use of PDLC" (en français "Modulateur à fibre optique indépendant de la polarisation mettant en oeuvre un PDLC"), Applied Optics Vol. 37, pp 3181-3189, 1998 par Takizama, Kodama et Kishi, d'associer l'utilisation de fibres optiques monomodes à celle de composants de type PDLC.

Une telle association présente cependant de sévères limitations fonctionnelles, liées notamment à la faible efficacité d'atténuation d'un tel dispositif. En effet, pour obtenir une atténuation suffisamment importante du faisceau incident, il est nécessaire d'accroître l'épaisseur de la cellule de PDLC, et donc d'augmenter la tension électrique appliquée aux bornes de la cellule, en proportions souvent prohibitives.

Les deux solutions décrites ci-dessus sont néanmoins potentiellement des solutions bas-coût, qui présentent l'avantage d'être insensibles à la polarisation, tout en bénéficiant des atouts de l'utilisation de cristaux liquides, tels que par exemple une faible consommation énergétique.

Cependant, elles ne permettent pas de répondre aux nouvelles spécifications liées aux systèmes de télécommunications actuels, et doivent donc être modifiées et adaptées, notamment dans une logique de composant bas-coût. En particulier, elles ne permettent pas d'atteindre une dynamique d'atténuation suffisante.

On connaît encore, par le document JP-11052339 (NTT), un procédé de fabrication de VOAs, selon lequel on forme un ruban de fibres, positionnées sur une plate-forme. Le ruban est ensuite scié pour créer un espace, qui est rempli par du PDLC. Cette technique présente l'avantage de permettre la réalisation simultanée de plusieurs dispositifs (le remplissage de PDLC pouvant être effectué collectivement).

Cependant, cette technique s'avère peu efficace en pratique. Le sciage entraîne des états de surface de mauvaise qualité, pouvant induire des pertes optiques, et une pollution importante, due à l'attaque mécanique de la fibre. Le sciage peut provoquer en outre une amorce de rupture dans la plate-forme de soutien, qui peut amener une fragilité mécanique. Cela peut également entraîner une pollution métallique (due au sciage de la partie métallisée) de la zone contenant le cristal liquide, et ainsi créer un court-circuit.

Un autre inconvénient de cette technique est qu'il est difficile de bien positionner les fibres (la distance entre les fibres est contrôlée seulement par l'épaisseur de la scie, et il est difficile de contrôler l'alignement des fibres), ce qui conduit également à des pertes optiques.

De plus, la réalisation de la plate-forme, avec des vés de positionnement précis, qui sont obtenus à l'aide de techniques de gravure et de masquage lourdes à mettre en oeuvre, s'avère complexe et coûteuse.

L'invention a notamment pour objectif de pallier ces inconvénients de l'art antérieur.

Plus précisément, un objectif de l'invention est de fournir un procédé simple et efficace de fabrication de dispositifs d'atténuation optique variable, répondant aux contraintes spécifiques liées aux systèmes de télécommunication actuels.

Notamment, un objectif de l'invention est de mettre en oeuvre un procédé de fabrication qui permette de fabriquer des VOAs qui soient simples et peu coûteux à concevoir, à assembler et à mettre en oeuvre.

L'invention a encore pour objectif de fournir un tel procédé, produisant des dispositifs d'atténuation optique compacts et robustes.

L'invention a également pour objectif de un fournir un tel procédé, dont les dispositifs d'atténuation optique variable présentent une grande dynamique d'atténuation.

Encore un autre objectif de l'invention est de fournir un tel procédé, permettant d'obtenir des dispositifs d'atténuation optique variable qui présentent une grande plage d'utilisation en température et une indépendance à la polarisation.

Ces objectifs, ainsi que d'autres qui apparaîtront par la suite, sont atteints à l'aide d'un procédé de fabrication d'un dispositif d'atténuation d'un signal véhiculé par fibre optique sous la forme d'un signal lumineux, comprenant les étapes suivantes :

- expansion du coeur optique d'une première et d'une seconde fibres monomodes ;
- montage en vis-à-vis desdites première et seconde fibres, dans un capillaire contenant un cristal liquide ;
- polymérisation dudit cristal liquide, pour réaliser un élément d'atténuation.

La mise en oeuvre d'un capillaire contenant un cristal liquide permet de fortement simplifier le montage et les réglages, les deux fibres étant précisément guidées en vis-à-vis. On obtient ainsi un auto-alignement.

On notera que le capillaire est rempli de cristal liquide avant la mise en place des fibres, ce qui permet de réaliser un remplissage par capillarité, assurant un remplissage sans bulle d'air et permettant de chasser les éventuelles pollutions (gazeuses, liquides,...), de façon à obtenir une pureté absolue du cristal liquide.

De façon avantageuse, le procédé de l'invention comprend également, après ladite étape d'expansion, une étape de :

- dépôt d'une électrode sur au moins une portion de la périphérie et sur au moins une portion de l'extrémité de chacune desdites fibres.

Le dépôt en extrémité de la fibre permet de limiter les tensions de commande de l'atténuateur.

Prréférentiellement, ladite étape d'expansion comprend une étape d'assemblage et de fracture d'au moins deux portions de fibre en extrémité de chacune desdites fibres monomodes.

Cette technique de fracture permet d'obtenir un état de surface de très bonne qualité, contrairement aux techniques mettant en oeuvre un sciage, et ne provoque ni pollution ni fragilisation.

Dans ce cas, lesdites portions de fibre comprennent avantageusement une portion de fibre à gradient d'indice et une portion de fibre en silice pur.

De façon préférentielle, ledit cristal liquide est un cristal liquide dispersé dans un polymère (PDLC). Avantageusement, ledit cristal liquide dispersé dans un polymère est un cristal liquide nématique à anisotropie négative.

Selon un mode de réalisation avantageux, ladite étape de polymérisation met en oeuvre une polymérisation dudit cristal liquide dispersé dans un polymère par un rayonnement ultra-violet.

Ainsi, le procédé de l'invention peut notamment comprendre les étapes suivantes :

- expansion du coeur optique de deux fibres par assemblage et fracture d'une fibre à gradient d'indice et de silice pur ;
- métallisation de la périphérie et de l'extrémité desdites fibres ;
- insertion d'une première et d'une seconde desdites fibres métallisées en vis-à-vis dans un capillaire contenant un cristal liquide ;
- ajustement de la distance entre les extrémités desdites fibres en vis-à-vis ;
- polymérisation dudit cristal liquide par un rayonnement ultraviolet.

Selon un autre aspect avantageux de l'invention, au moins une partie des extrémités desdites fibres en vis-à-vis est conductrice et sensiblement transparente.

On peut également avantageusement prévoir qu'un bloc tampon de fibre multimode à saut d'indice est ajouté à chacune desdites extrémités en vis-à-vis desdites première et deuxième fibres, ledit bloc étant de diamètre extérieur sensiblement égal à celui desdites première et deuxième fibres.

Selon une variante de mise en oeuvre de l'invention, ladite étape d'expansion comprend une étape de diffusion de dopants du coeur optique d'une fibre monomode clivée.

De façon préférentielle, lesdites fibres monomodes à coeur étendu sont des fibres à maintien de polarisation.

Selon une autre variante de l'invention, ledit procédé comprend une étape de d'insertion de moyens de contrôle par un champ optique desdits moyens d'atténuation.

L'invention concerne également les dispositifs d'atténuation fabriqués selon le procédé décrit ci-dessus. Un tel dispositif d'atténuation d'un signal véhiculé par fibre optique sous la forme d'un signal lumineux comprend une première et une seconde fibres monomodes à coeur optique étendu montées en vis-à-vis dans un capillaire contenant un cristal liquide formant moyens d'atténuation.

Avantageusement, au moins une portion de la périphérie et au moins une portion de l'extrémité de chacune desdites fibres de ce dispositif est métallisée.

De façon préférentielle, les extrémités desdites fibres sont obtenues par fracture.

L'invention concerne également les applications de ces dispositifs d'atténuation à la mise en oeuvre d'un limiteur de puissance contrôlable par puissance optique ou d'un atténuateur variable contrôlable par tension.

L'invention concerne encore les systèmes d'atténuation d'au moins un signal véhiculé par fibre optique sous la forme d'un faisceau lumineux, comprenant au moins deux dispositifs d'atténuation, les fibres desdits au moins deux dispositifs d'atténuation étant disposées en ruban de fibres.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1, déjà décrite précédemment, présente un schéma simplifié d'un atténuateur optique de l'art antérieur mettant en oeuvre des micro-lentilles collimatrices de type selfocs ;
- la figure 2 présente un synoptique d'un ruban de micro-optique mis en oeuvre dans un système d'atténuation selon l'invention ;
- la figure 3 illustre une vue schématique d'une micro-optique de la figure 2 présentant une zone tampon ;
- la figure 4 présente une fibre à coeur étendu de type TEC pouvant être mise en oeuvre dans une variante de réalisation de l'invention ;
- les figures 5a et 5b illustrent le principe de fonctionnement d'un atténuateur optique selon l'invention lorsqu'il comprend un cristal de type PDLC contrôlé par un champ électrique ;
- les figures 6a et 6b illustrent le principe de fonctionnement d'un atténuateur optique selon l'invention lorsqu'il est contrôlé par la puissance optique ;
- les figures 7a à 7d illustrent le principe d'un atténuateur optique comprenant un composant de type PDLC pouvant être contrôlé simultanément par la tension et par la puissance optique ;
- les figures 8a et 8b présentent des exemples de supports sur lesquels peut être intégré un système d'atténuation optique selon l'invention ;
- la figure 9 est un organigramme simplifié illustrant le procédé de fabrication de l'invention, permettant d'obtenir les dispositifs des figures précédentes ;

- la figure 10 illustre une fibre après métallisation, selon le procédé de la figure 9 ;

la figure 11 présente l'assemblage des fibres optiques à l'aide d'un capillaire, selon le procédé illustré par la figure 9.

*1. structure du dispositif obtenu selon l'invention*

Le principe général du dispositif d'atténuation réalisé à l'aide du procédé de l'invention repose sur la combinaison de fibres monomodes à coeur étendu et d'une cellule de cristal liquide de type PDLC pour réaliser un atténuateur optique variable compact et présentant une grande dynamique d'atténuation.

1.1 caractéristiques et avantages du dispositif

Un dispositif obtenu selon l'invention comprend :

- une première fibre monomode à coeur étendu, formant moyens d'élargissement d'une section dudit faisceau lumineux ;
- un cristal liquide formant moyens d'atténuation d'une énergie associée audit faisceau lumineux élargi ;
- une deuxième fibre monomode, située en vis-à-vis de ladite première fibre monomode, ladite deuxième fibre étant de type à coeur étendu, de manière à former moyens de réduction d'une section dudit faisceau lumineux atténué,

et ledit cristal liquide est inséré dans une cavité formée entre lesdites deux fibres monomodes en vis-à-vis, ladite cavité étant de section sensiblement égale à la section de chacune desdites fibres à coeur étendu.

Ainsi, on met en oeuvre une approche de l'atténuation d'un signal véhiculé par fibre optique, offrant les avantages des cristaux liquides, tout en présentant une bonne dynamique d'atténuation, et une grande simplicité d'assemblage du dispositif.

En effet, on propose notamment un atténuateur optique comprenant des fibres optiques à coeur étendu, de façon à élargir la section du faisceau optique incident sur le cristal liquide, et à permettre ainsi une meilleure atténuation de la puissance optique, tout en maintenant une cellule de cristal liquide de faible épaisseur.

On prévoit également de concevoir une cellule de cristal liquide de section égale à celle des fibres à coeur étendu constituant le dispositif d'atténuation : ainsi, le dispositif d'atténuation optique selon l'invention présente l'avantage d'être compact, et d'une grande simplicité de fabrication. L'alignement des différents éléments constitutifs de l'atténuateur optique est rendu très facile, tous les éléments étant de section sensiblement identique, et le dispositif ainsi conçu est donc plus tolérant que les dispositifs de l'art antérieur vis-à-vis des erreurs de positionnement des fibres, ce qui permet de réduire avantageusement les pertes d'insertion.

Avantageusement, au moins une partie des extrémités desdites fibres en vis-à-vis est conductrice et sensiblement transparente.

On peut ainsi contrôler le dispositif d'atténuation optique selon l'invention en appliquant une tension électrique aux extrémités conductrices des fibres en vis-à-vis, sans pour autant entraver la transmission du faisceau lumineux, ces extrémités conductrices étant sensiblement transparentes.

Selon une première variante avantageuse, chacune desdites première et deuxième fibres à coeur étendu est réalisée par ajout, à au moins une extrémité d'une fibre monomode, d'au moins un bloc de nature distincte de celle de ladite fibre monomode, ledit au moins un bloc étant choisi de façon que son diamètre extérieur soit sensiblement égal à celui de ladite fibre monomode.

En effet, on privilégie la compacité et la simplicité d'assemblage du dispositif d'atténuation de l'invention, en veillant à ce que les éléments qui le constituent soient de sections sensiblement égales.

Préférentiellement, chacune desdites première et deuxième fibres à coeur étendu est réalisée par ajout à au moins une extrémité d'une fibre monomode d'au moins deux blocs, de natures distinctes de celle de ladite fibre monomode, et lesdits au moins deux blocs comprennent :

- un bloc de fibre en silice ;
- un bloc de fibre multimode à gradient d'indice.

On conçoit ainsi des première et deuxième fibres spéciales, incluant en leur extrémité une micro-optique, comprenant une section de fibre à gradient d'indice et une section de fibre en silice sans coeur. La taille du spot, et la distance séparant les deux fibres monomodes en vis-à-vis dans le dispositif peuvent être ajustées par modification de la longueur des deux blocs de la micro-optique. Par ailleurs, une telle micro-optique peut être protégée et déplacée de l'extrémité de la fibre monomode, de façon à permettre des traitements de surface, comme par exemple le dépôt d'électrodes.

Selon un mode de réalisation avantageux, un bloc tampon de fibre multimode à saut d'indice est en outre ajouté à chacune desdites extrémités en vis-à-vis desdites première et deuxième fibres, ledit bloc étant choisi de façon que son diamètre extérieur soit sensiblement égal à celui desdites première et deuxième fibres.

Une telle fibre tampon peut être rapportée à l'extrémité de la micro-optique par soudure, de manière notamment à faciliter le procédé de packaging de l'atténuateur selon l'invention.

Selon une deuxième variante avantageuse, lesdites deux fibres monomodes à coeur étendu sont réalisées par diffusion de dopants du coeur optique d'une fibre monomode clivée.

Les fibres monomodes à coeur étendu ainsi réalisées permettent d'élargir ou de réduire la section du faisceau lumineux, tout en présentant un diamètre extérieur constant.

Avantageusement, lesdites première et deuxième fibres monomodes à coeur étendu sont des fibres à maintien de polarisation.

Selon une technique avantageuse, ledit cristal liquide est un cristal liquide dispersé dans un polymère (en anglais PDLC pour "Polymer Dispersed Liquid Crystal").

On peut ainsi envisager de réaliser un composant constitué d'une suspension de gouttelettes de cristal liquide dans un milieu hôte de type polymère. Dans un tel composant, l'orientation des directeurs à l'intérieur des gouttelettes est déterminée par les interactions entre polymère et cristal liquide à l'interface. Ces orientations sont généralement aléatoirement distribuées en l'absence de champ électrique.

Selon une première caractéristique avantageuse, un tel dispositif comprend des moyens de contrôle par un champ électrique desdits moyens d'atténuation.

Ainsi, en appliquant une tension électrique aux bornes de la cellule de cristal liquide, on peut influer sur l'ampleur du phénomène de diffusion qui y prend naissance. Dans le cas où le cristal liquide est de type PDLC, on peut ainsi contrôler la différence entre les indices de réfraction relatifs du cristal liquide et du polymère, et faire continûment passer le PDLC d'un état opaque à un état transparent. Le faisceau optique incident sur le cristal est alors atténué, du fait de l'énergie perdue par diffusion lors de la traversée du cristal liquide.

Avantageusement, au moins une partie de la périphérie de chacune desdites première et deuxième fibres monomodes à coeur étendu est métallisée, et ledit champ électrique est créé entre deux électrodes constituées par chacune desdites parties métallisées desdites fibres en vis-à-vis.

Cette technique constitue une variante à la métallisation des extrémités des fibres décrite précédemment.

Selon une deuxième caractéristique avantageuse, un tel dispositif comprend des moyens de contrôle par un champ optique desdits moyens d'atténuation.

En effet, dans des conditions de fort éclairement (typiquement de l'ordre de plusieurs centaines de mW par 100μm$^2$), on observe, dans un cristal de type PDLC, une réorientation du directeur induite par le champ optique. Une onde électromagnétique incidente de polarisation quelconque, de forte puissance, perpendiculaire à l'axe de propagation du faisceau lumineux, a pour effet d'orienter toutes les molécules de cristal liquide du PDLC dans une même direction. Le PDLC est alors rendu très fortement diffuseur, et le dispositif d'atténuation selon l'invention se comporte donc comme un limiteur de puissance optique.

On réalise ainsi un limiteur de puissance à coût réduit, puisque la puissance du faisceau lumineux peut être atténuée sans qu'il soit nécessaire d'appliquer une tension aux bornes du dispositif.

On peut également envisager d'ajouter un dopant au cristal liquide du PDLC, de façon à augmenter l'effet non-linéaire qui y prend naissance.

1.2 description d'un mode de réalisation d'un dispositif

On présente, en relation avec la figure 2, un mode de réalisation d'un ruban de micro-optique utilisé dans un système d'atténuation selon l'invention.

On rappelle que, selon l'invention, un tel système d'atténuation d'un signal véhiculé par fibre optique sous la forme d'un faisceau lumineux comprend une pluralité de dispositifs d'atténuation, et que la pluralité de fibres optiques mises en oeuvre dans ces dispositifs sont disposées en ruban de fibres, ainsi que représenté sur la figure 2.

Le ruban illustré en figure 2 comprend 4 paires de fibres optiques monomodes en vis-à-vis $(21_1, 21_2)$, $(22_1, 22_2)$, $(23_1, 23_2)$ et $(24_1, 24_2)$. A l'extrémité de chacune des fibres optiques monomodes en vis-à-vis $21_1$ à $24_2$, on rapporte une section de fibre en silice sans coeur 25, puis une section de fibre multimode à gradient d'indice 26 (ou GRIN pour « Graded Index Fibre »). Ces sections de fibres sont rapportées par soudure aux extrémités des fibres monomodes.

La taille du spot lumineux σ et la distance de travail δ peuvent être ajustées par modification de la longueur de ces deux sections. Le diamètre de spot, défini à $1/e^2$ du maximum d'intensité, peut être étendu jusqu'à 60 μm, par rapport à une largeur de fibre monomode d'environ 10 μm. La perte d'insertion entre les deux micro-optiques est de 0,84 dB incluant le gap d'air et une tolérance latérale (plus de $\pm$ 10 μm pour 1dB de pertes).

Le procédé de fabrication du ruban de micro-optiques de la figure 2 nécessite peu d'étapes, et est donc bien adapté à une production de masse à bas coût. Le diamètre extérieur de l'ordre de 125 μm des fibres monomodes est maintenu le long de la micro-optique du ruban de la figure 2, et permet donc un packaging compact. Par ailleurs, une tolérance importante aux défauts d'alignement facilite l'assemblage collectif d'un tel ruban.

Ainsi qu'illustré en figure 2, une telle micro-optique permet d'obtenir une distance de travail δ comprise environ entre 0 et 1 mm, ce qui permet d'introduire entre les extrémités de chacune des paires de fibres $(21_1, 21_2)$, $(22_1, 22_2)$, $(23_1, 23_2)$ et $(24_1, 24_2)$, allongées des sections 25 et 26, une épaisseur suffisante de cristal liquide de type PDLC pour réaliser un atténuateur optique performant.

Par ailleurs, la micro-optique présentée en figure 2 permet d'obtenir un large spot, ce qui accroît les propriétés de diffuseurs du PDLC, car un plus grand volume de PDLC est ainsi traversé par le faisceau lumineux.

Toutes ces propriétés permettent donc une conception et un assemblage du ruban de la figure 2, et du système d'atténuation optique dans lequel il est mis en oeuvre, qui sont bien adaptés aux spécifications des systèmes de télécommunication actuels (à savoir de faibles pertes d'insertion, une faible PDL (en anglais, « Polarization Dependant Loss » pour « perte dépendante de la polarisation », etc.), et ceci à très faible coût.

La micro-optique présenté en figure 2, qui permet l'extension du faisceau optique transmis par les fibres monomodes, peut être protégée et déplacée de l'extrémité de la fibre monomode, permettant ainsi de faciliter la mise en oeuvre de traitements de surface, tels que le dépôt d'électrodes.

Une distance tampon peut notamment être introduite en bout de fibre, ainsi qu'illustré en figure 3. Une fibre tampon 31 est rapportée à l'extrémité de la micro-optique constituée par la fibre monomode $21_1$, la fibre GRIN 26 et la fibre en silice 25, par soudure. Cette fibre tampon est, dans un mode de réalisation préféré de l'invention, une fibre multimode à saut d'indice.

L'ajout d'une telle fibre tampon 31 à l'extrémité de la micro-optique peut faciliter le procédé de packaging des fibres constitutives du dispositif d'atténuation selon l'invention.

En effet, la fibre tampon 31 permet de maintenir un mode élargi dans la fibre à coeur étendu sans que la longueur de cette dernière soit critique. Une telle propriété permet de simplifier le clivage de la fibre.

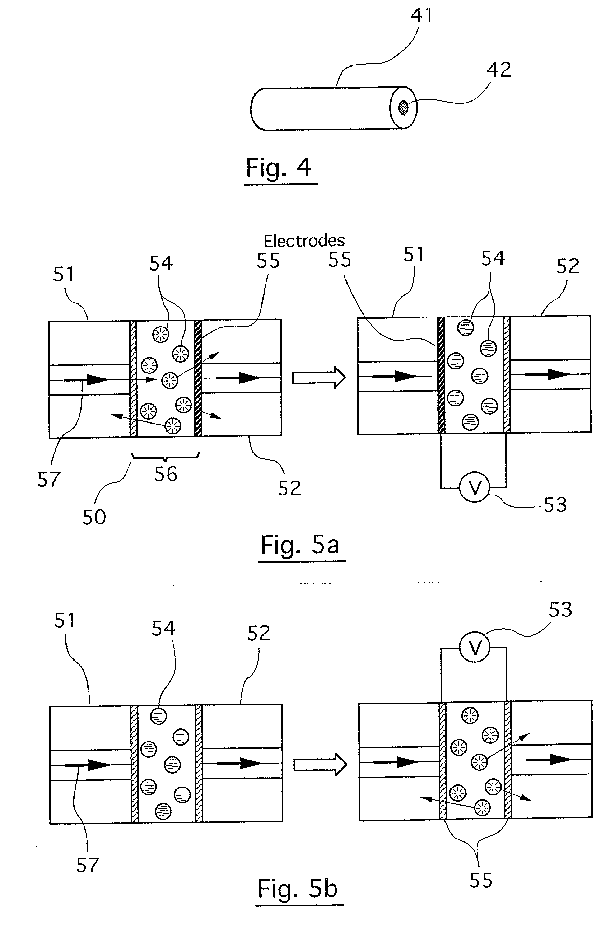

La micro-optique illustrée en figures 2 et 3 constitue une première solution pour élargir le faisceau lumineux véhiculé par une fibre optique sans modifier le diamètre extérieur de cette fibre. Une deuxième solution est illustrée en figure 4. Elle consiste à modifier le coeur optique 42 d'une fibre monomode 41 par diffusion des atomes du dopage, en mettant en oeuvre un traitement thermique spécifique. On obtient ainsi une fibre 41 à mode élargi, appelée TEC (pour l'anglais « Thermally diffused Expanded Core », en français « coeur étendu par diffusion thermique »). Une telle fibre 41 est notamment présentée dans le document « Beam expansing fiber using thermal diffusion of the dopant" (en français, « Fibre à élargissement de faisceau par diffusion thermique du dopant »), JLT, vol. 8, n°8, August 1990, pp. 1151-1161 par Shiraishi et al.

Dans le cadre de l'invention, on peut cliver cette fibre à coeur étendu 41, et insérer une cellule de cristal liquide entre les deux parties de fibre ainsi obtenues. Les deux parties de fibre à coeur étendu obtenues par clivage constituent alors respectivement des moyens d'élargissement et des moyens de réduction d'une section du faisceau lumineux, ce faisceau étant atténué en traversant la cellule de cristal liquide intermédiaire.

On présente désormais, en relation avec les figures 5a et 5b, le principe général de l'atténuation contrôlée par application d'un champ électrique d'un faisceau optique qui traverse une cellule de cristal liquide de type PDLC dans le cadre de l'invention.

On considère l'atténuateur optique 50. Un tel atténuateur 50 comprend :

- une première fibre monomode à coeur étendu 51, permettant d'élargir la section du faisceau lumineux ;
- une cellule 56 de PDLC, dans laquelle des gouttelettes 54 de cristal liquide sont en suspension dans un polymère. Cette cellule est, selon l'invention, de diamètre extérieur égal à celui de la fibre 51 ;
- une deuxième fibre monomode à coeur étendu 52, permettant de réduire la section du faisceau lumineux atténué par la cellule 56, de diamètre extérieur égal à celui de la fibre 51 et de la cellule 56.

Les fibres 51 et 52 peuvent être des fibres de type TEC, telles qu'illustrées sur la figure 4, ou des fibres monomodes à l'extrémité desquelles ont été rapportées par soudure des sections de fibre GRIN et de fibre en silice sans coeur, telles qu'illustrées en figures 2 et 3.

Comme évoqué précédemment, l'orientation des directeurs à l'intérieur des gouttelettes 54 est déterminée par les interactions entre le polymère et le cristal liquide à l'interface. Ces orientations sont généralement aléatoirement distribuées en absence de champ électrique, ainsi qu'illustré en figure 5a. La différence d'indice relative entre le cristal liquide et le polymère induit un phénomène de diffusion. Du fait que l'épaisseur de la cellule 56 (typiquement de l'ordre de 10µm) est beaucoup plus grande que la taille des gouttelettes 54 (typiquement de l'ordre de 0,5 à 1µm), la lumière incidente 57 est diffusée plusieurs fois avant d'émerger de la cellule 56, ainsi que représenté par les flèches en traits fins de la figure 5a. L'importance du phénomène de diffusion dépend de la taille, de la biréfringence et de la concentration des gouttelettes 54.

En contrôlant la différence entre les indices de réfraction relatifs du cristal liquide et du polymère, le PDLC 56 peut passer continûment de l'état opaque à l'état transparent. Un faisceau optique 57 incident par la fibre 51 est alors atténué du fait de l'énergie perdue par diffusion. Dans une configuration de PDLC préférée de l'invention, c'est le régime de Mie qui est considéré, à savoir une discontinuité d'indice très faible entre le polymère et le cristal liquide (de l'ordre de δn<<1), pour une taille de gouttelette 54 comparable à la longueur d'onde de la lumière incidente 57.

L'atténuation ainsi obtenue suit alors la loi de Beer-Lambert :

$$I(z) = I(0)\exp(-2\pi Na^2 z) \qquad (1)$$

où N est le nombre de gouttelettes 54 par unité de volume, a le diamètre des gouttelettes (supposées de forme sphérique) et z l'axe de propagation. La relation (1) donne les paramètres physiques déterminant la gamme d'atténuation du faisceau 57. L'épaisseur de la cellule de PDLC est seulement limitée par les tensions appliquées.

Lorsqu'on applique une tension 53 aux bornes de la cellule 56, les directeurs des gouttelettes s'orientent dans le champ électrique, et le faisceau incident 57 n'est plus diffusé. Le PDLC est alors transparent.

On notera qu'on a représenté sur les figures 5a et 5b des électrodes 55, aux bornes desquelles sont appliquées la tension 53. Ces électrodes peuvent être réalisées par un dépôt conducteur transparent aux extrémités des fibres 51 et 52. Elles peuvent également être réalisées en opérant une métallisation au moins partielle de la périphérie des fibres 51 et 52.

La figure 5b illustre un atténuateur optique similaire à celui de la figure 5a, mais dans lequel le PDLC utilisé est un cristal liquide nématique à anisotropie diélectrique négative, dans une configuration homéotrope.

Un tel atténuateur optique 50 présente l'avantage que les gouttelettes 54 de cristal liquide sont alignées parallèlement à la direction de propagation du faisceau lumineux 57 en absence de champ électrique, c'est-à-dire à l'état de repos.

L'atténuateur 50 est donc transparent lorsque la tension appliquée 53 est nulle, ce qui présente donc des avantages opérationnels, notamment en termes de dépense énergétique. L'atténuateur 50 passe dans un état opaque lorsqu'on applique une tension 53 aux bornes des électrodes 55.

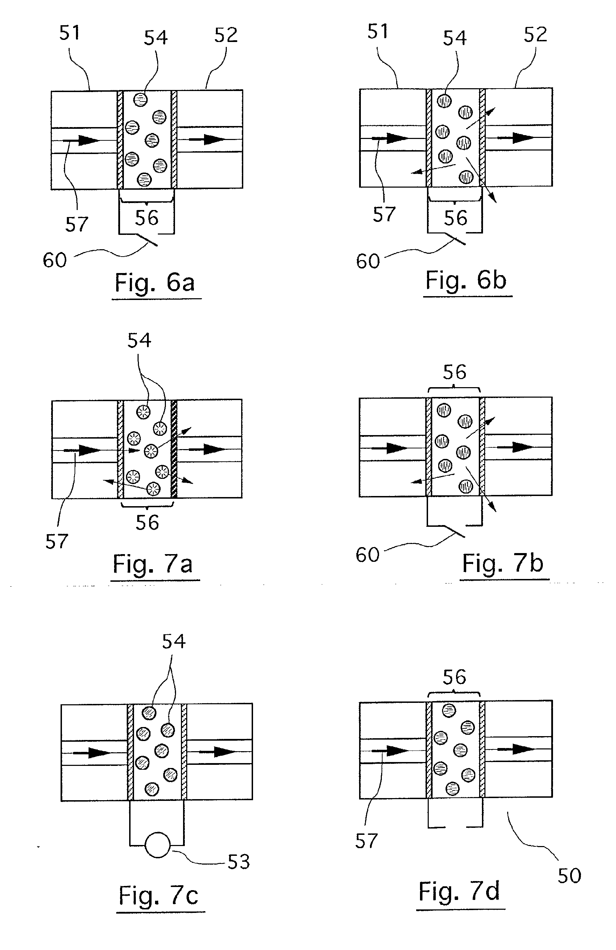

On peut également, dans un autre mode de réalisation de l'invention, envisager un pilotage du PDLC par la puissance optique, ainsi qu'illustré par les figures 6a et 6b.

Sur la figure 6a, la puissance optique à laquelle est soumis le PDLC 56 est de faible amplitude. La tension électrique appliquée aux bornes du PDLC 56 est nulle, ainsi que schématisé par l'interrupteur ouvert 60. Le faisceau incident 57 ne subit pas de diffusion lorsqu'il traverse la cellule de PDLC 56.

Sur la figure 6b en revanche, la puissance optique associée au faisceau incident 57 est forte. Les molécules des gouttelettes 54 s'orientent alors perpendiculairement à la direction de propagation du faisceau 57, qui est fortement diffusé lors de la traversée de la cellule 56, ainsi qu'illustré par les flèches divergentes en traits fins de la figure 6b. On notera que la tension appliquée aux bornes du PDLC 56 est toujours nulle, ainsi que l'illustre l'interrupteur ouvert 60.

En effet, dans des conditions de fort éclairement (typiquement de l'ordre de plusieurs dizaines de mW par 100 $\mu m^2$), l'onde électromagnétique de polarisation quelconque (de forte puissance) incidente qui est perpendiculaire à l'axe de propagation du faisceau lumineux 57 a pour effet d'orienter les molécules des gouttelettes 54 dans la même direction. Le PDLC 56 est alors rendu très diffuseur. Le maximum de biréfringence est atteint en configuration homéotrope lorsque le cristal liquide est orienté dans un plan perpendiculaire à l'axe de propagation de la lumière.

L'atténuateur optique 50 se comporte alors en limiteur de puissance optique, c'est-à-dire comme un interrupteur qui se ferme automatiquement lorsque la puissance optique est très importante, selon un comportement similaire à celui du Q switch.

L'effet illustré en figure 6b est utilisé lorsque le cristal liquide est en configuration homéotrope avec une anisotropie diélectrique positive.

On présente désormais, en relation avec les figures 7a à 7d, un exemple de réalisation d'un atténuateur optique selon l'invention présentant simultanément des moyens de contrôle optique et électrique de l'atténuation appliquée au faisceau lumineux incident.

Sur la figure 7a, le PDLC 56 de l'atténuateur optique 50 est dans un état de repos. Les directeurs des gouttelettes 54 sont orientés aléatoirement en l'absence de champ électrique. Le PDLC 56 est alors dans un état opaque, et atténue un faisceau incident 57 par diffusion, comme illustré par les flèches en traits fins de la figure 7a.

Selon l'invention, on peut envisager d'exposer le composant 56 à un champ transversal intense lors de la polymérisation du PDLC, par voie optique ou par voie électrique. Les molécules des gouttelettes 54 vont alors toutes être orientées au repos dans un plan perpendiculaire par rapport à l'axe de propagation du faisceau lumineux 57, et suivant le vecteur de polarisation de l'onde incidente.

Ainsi, si l'on expose le PDLC 56 à un fort champ optique lors de sa polymérisation, on obtient un atténuateur optique 50 qui présente au repos un état opaque optimum, illustré en figure 7b : les directeurs sont orientés perpendiculairement à l'axe de propagation du faisceau lumineux, l'amplitude du phénomène de diffusion (schématisé par les flèches en traits fins) est maximale.

Si, en revanche, on soumet le PDLC 56 à un fort champ électrique au cours de la polymérisation, on obtient au repos un état transparent optimum de l'atténuateur 50, dans lequel les molécules des gouttelettes sont alignées dans la direction de propagation du faisceau lumineux incident 57, ainsi qu'illustré en figure 7d.

Lorsqu'un atténuateur optique, présentant une configuration au repos similaire à celle de la figure 7d, est soumis à une forte puissance optique, les directeurs des gouttelettes 54 ont tendance, sous l'effet du champ optique, à s'orienter dans une configuration perpendiculaire à la direction de propagation du faisceau 57, ainsi qu'illustré en figure 7b. On réalise alors un dispositif limiteur de puissance optique.

Lorsqu'un atténuateur optique, présentant une configuration au repos similaire à celle de la figure 7b, est soumis à une tension électrique, les directeurs des gouttelettes 54 ont tendance, sous l'effet du champ électrique, à s'orienter dans la direction de propagation du faisceau 57. On réalise alors un atténuateur optique variable.

Lorsqu'on envisage un contrôle simultané par la puissance optique et par le champ électrique, ainsi qu'illustré en figure 7c, les gouttelettes 54 de cristal liquide subissent l'effet antagoniste des deux champs dus à l'onde optique et à la tension appliquée 53 et s'alignent selon la résultante vectorielle de ces deux champs.

Il faut noter cependant que lorsque le dispositif est dans un régime de type limiteur de puissance, le contrôle principal du dispositif est effectué par la puissance optique, l'application d'une tension ne venant que contrebalancer cet effet. Inversement, lorsque le dispositif selon l'invention est dans une configuration de type atténuateur optique variable, le contrôle principal s'effectue par la tension appliquée aux bornes de la cellule de PDLC, l'influence de la puissance optique ne permettant que de contrebalancer cet effet.

Cette propriété des cellules de PDLC de pouvoir être contrôlées simultanément par puissance optique et par tension électrique permet de réaliser des atténuateurs à forte dynamique.

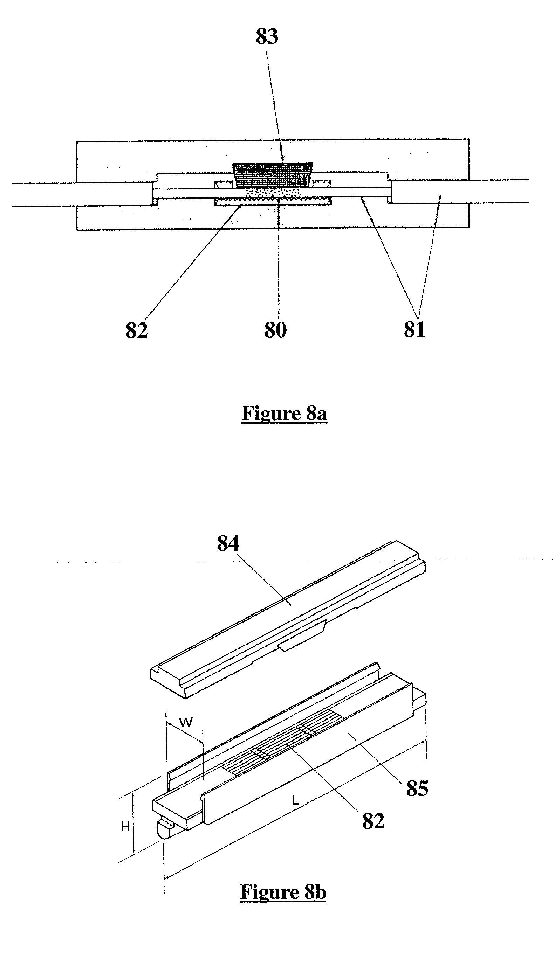

On présente désormais en relation avec les figures 8a et 8b des exemples de supports sur lesquels un atténuateur optique selon l'invention peut être intégré.

Comme indiqué précédemment, un atténuateur optique selon l'invention a une structure d'assemblage simple, et est composé de deux fibres à mode élargi en vis-à-vis et d'un cristal liquide inséré dans la cavité formée entre ces deux fibres. Le champ électrique de contrôle du niveau d'atténuation est appliqué au cristal liquide par l'intermédiaire des fibres, par exemple par dépôt d'électrodes transparentes sur celles-ci. Un contrôle optique du niveau d'atténuation est aussi possible via un éclairement du cristal liquide. L'ensemble de ce dispositif d'atténuation est intégré dans un support, qui peut par ailleurs regrouper plusieurs atténuateurs ou limiteurs de puissance. Une réalisation collective est donc possible pour réduire les coûts de fabrication. Un exemple de support est présenté en figures 8a et 8b.

Ainsi qu'illustré en figure 8a, un tel support maintient une fibre optique 81, dans laquelle a été insérée une cellule de PDLC 80 selon la technique décrite précédemment. Il comprend notamment un contact 83 et un micro capillaire 82.

La vue éclatée d'un support présentée en figure 8b laisse apparaître le corps du support 85, la partie supérieure du support 84, et le micro capillaire 82.

*2. procédé de fabrication de l'invention*

La figure 9 est un organigramme simplifié présentant le procédé de fabrication de dispositifs VOAs tels que décrits ci-dessus. Comme on le verra par la suite, ce procédé est simple et efficace, et permet notamment de limiter les pertes optiques, par rapport aux techniques de l'art antérieur.

Selon l'invention, on prévoit tout d'abord une étape d'expansion 91 du coeur optique de deux fibres. Pour cela, on assemble (9111, 9121) puis on fracture (9112, 9122) des portions de fibre en extrémité de la fibre monomode.

Cet assemblage peut être un assemblage de sections de fibre en silice pur (912) et de fibre à gradient d'indice (911). Une variante à cet assemblage peut être le rajout d'une section de silice pur et/ou d'une section de fibre multimode à l'extrémité de ces dites fibres. Une alternative à cette expansion de coeur optique est l'utilisation d'une technologie par diffusion thermique des dopants de la fibre monomode.

Ainsi, les extrémités des fibres sont clivées, et non sciées. L'état de surface est donc meilleur, et aucune pollution n'est générée.

Ensuite, on effectue un dépôt d'électrode 92, par métallisation de la périphérie de la fibre ainsi que de son extrémité.

La présente invention prévoit donc un dépôt métallique en extrémité d'une fibre optique. Ce dépôt a la particularité d'être métallique afin d'assurer une conduction électrique et d'être en même temps transparent optiquement aux champs électromagnétiques qui se propagent dans la fibre optique. Ce dépôt est obtenu par pulvérisation cathodique.

On réalise une métallisation épaisse en périphérie de la fibre pour amener une tension électrique en extrémité de la fibre. Cette tension permettra de contrôler le niveau d'atténuation de l'atténuateur variable. L'extrémité de la fibre subit aussi un dépôt métallique qui est conducteur électriquement et en même temps transparent optiquement. Cette extrémité sera directement en contact avec le PDLC et sera traversée par le faisceau optique. C'est pour ces raisons que son dépôt se doit d'être conducteur et transparent.

Une variante à l'utilisation d'un dépôt métallique est l'utilisation de dépôt en ITO (Indium Tin Oxyde).

La figure 10 illustre une fibre à cet instant de la fabrication. La fibre optique 101 est recouverte d'un dépôt métallique épais 102 en périphérie et d'un dépôt métallique transparent et conducteur 103 en extrémité, laissant passer le faisceau optique 104. Un fil électrique 105 est relié au dépôt métallique 102, via un contact électrique 106, pour permettre le contrôle du dispositif.

Deux fibres ainsi obtenues sont insérées 93 dans un capillaire contenant du PDLC, comme cela est illustré en figure 11.

L'assemblage de l'atténuateur optique consiste donc à aligner deux de ces fibres 111 et 112 (métallisées avec expansion du coeur optique) en vis-à-vis avec du PDLC 113 entre les deux. L'innovation de cet atténuateur optique réside notamment dans l'utilisation d'un capillaire 114 (tube de précision).

Les fibres sont introduites à chaque extrémité du capillaire. L'alignement de précision des coeurs optiques des fibres est ainsi optimisé et aisé. Préalablement à l'introduction des fibres optiques, le capillaire est rempli de PDLC. C'est aussi un avantage du capillaire 114 d'être en même temps l'objet d'alignement des fibres que le réservoir à PDLC.

Des spécificités de ce capillaire sont des configurations avec ou sans trou radial pour évacuer le PDLC en excès, la profondeur et l'inclinaison des icônes d'introduction des fibres, la nature du matériau qui le compose. Il est optionnellement en verre.

On ajuste 94 ensuite la distance (e) entre les deux extrémités des fibres en vis-à-vis. La fonction optique de l'atténuateur variable est réalisée par le PDLC. Son épaisseur entre les fibres en vis-à-vis a donc une grande importance sur la qualité optique de l'atténuateur.

En effet, c'est dans cette distance inter-fibres que le faisceau optique va se propager librement et subir une diffusion. Ce niveau de diffusion est contrôlable par la tension électrique. Il peut être notamment transparent si aucune diffusion n'est apparente ou fortement atténuateur si la diffusion est élevée. On comprend d'autant plus que le réglage de son épaisseur a de l'importance sur les propriétés de l'atténuateur. Le capillaire rend aisé le réglage de cette épaisseur.

Enfin, on polymérise 95 le PDLC, par un rayonnement UV.

Le PDLC est un mélange de matériaux sous forme liquide avant polymérisation. Cette propriété facilite son introduction dans le capillaire et le réglage de l'écartement des fibres optiques dans ce dit capillaire. Pour obtenir les propriétés optiques de diffusion, il est nécessaire de polymériser ce mélange liquide pour le transformer en agglomérat mou. Cette polymérisation est effectuée aux UV.

De manière alternative, la température est une autre solution de polymérisation. Cet agglomérat mou a des qualités optiques qui sont différentes en fonction de la puissance, de l'énergie, de la longueur d'onde et de la manière d'insoler cette zone entre fibres. On entend par manière d'insoler, des insolations : radiale, axiale et leurs combinaisons.

**Revendications**

1. Procédé de fabrication d'un dispositif d'atténuation d'un signal véhiculé par fibre optique sous la forme d'un signal lumineux, **caractérisé en ce qu'**il comprend les étapes suivantes :

   - expansion du coeur optique d'une première et d'une seconde fibres monomodes ;
   - montage en vis-à-vis desdites première et seconde fibres, dans un capillaire contenant un cristal liquide ;

   - polymérisation dudit cristal liquide, pour réaliser un élément d'atténuation.

2. Procédé de fabrication d'un dispositif d'atténuation selon la revendication 1, **caractérisé en ce qu'**il comprend, après ladite étape d'expansion, une étape de :

   - dépôt d'une électrode sur au moins une portion de la périphérie et sur au moins une portion de l'extrémité de chacune desdites fibres.

3. Procédé de fabrication d'un dispositif d'atténuation selon l'une quelconque des revendications 1 et 2, **caractérisé en ce que** ladite étape d'expansion comprend une étape d'assemblage et de fracture d'au moins deux portions de fibre en extrémité de chacune desdites fibres monomodes.

4. Procédé de fabrication d'un dispositif d'atténuation selon la revendication 3, **caractérisé en ce que** lesdites portions de fibre comprennent une portion de fibre à gradient d'indice et une portion de fibre en silice pur.

5. Procédé de fabrication d'un dispositif d'atténuation selon l'une quelconque des revendications 1 à 4, **caractérisé en ce que** ledit cristal liquide est un cristal liquide dispersé dans un polymère (PDLC).

6. Procédé de fabrication d'un dispositif d'atténuation selon la revendication 5, **caractérisé en ce que** ledit cristal liquide dispersé dans un polymère est un cristal liquide nématique à anisotropie négative.

7. Procédé de fabrication d'un dispositif d'atténuation selon l'une quelconque des revendications 1 à 6, **caractérisé en ce que** ladite étape de polymérisation met en oeuvre une polymérisation dudit cristal liquide dispersé dans un polymère par un rayonnement ultra-violet.

8. Procédé de fabrication d'un dispositif d'atténuation selon l'une quelconque des revendications 1 à 7, **caractérisé en ce qu'**il comprend les étapes suivantes :

   - expansion du coeur optique de deux fibres par assemblage et fracture d'une fibre à gradient d'indice et de silice pur ;
   - métallisation de la périphérie et de l'extrémité desdites fibres ;
   - insertion d'une première et d'une seconde desdites fibres métallisées en vis-à-vis dans un capillaire contenant un cristal liquide ;
   - ajustement de la distance entre les extrémités desdites fibres en vis-à-vis ;
   - polymérisation dudit cristal liquide par un rayonnement ultraviolet.

**9.** Procédé de fabrication d'un dispositif d'atténuation selon l'une quelconque des revendications 1 à 8, **caractérisé en ce qu'**au moins une partie des extrémités desdites fibres en vis-à-vis est conductrice et sensiblement transparente.

**10.** Procédé de fabrication d'un dispositif d'atténuation selon l'une quelconque des revendications 1 à 8, **caractérisé en ce qu'**un bloc tampon de fibre multimode à saut d'indice est ajouté à chacune desdites extrémités en vis-à-vis desdites première et deuxième fibres,
ledit bloc étant de diamètre extérieur sensiblement égal à celui desdites première et deuxième fibres.

**11.** Procédé de fabrication d'un dispositif d'atténuation selon la revendication 1, **caractérisé en ce que** ladite étape d'expansion comprend une étape de diffusion de dopants du coeur optique d'une fibre monomode clivée.

**12.** Procédé de fabrication d'un dispositif d'atténuation selon l'une quelconque des revendications 1 à 11, **caractérisé en ce que** lesdites fibres monomodes à coeur étendu sont des fibres à maintien de polarisation.

**13.** Procédé de fabrication d'un dispositif d'atténuation selon la revendication 1, **caractérisé en ce qu'**il comprend une étape d'insertion de moyens de contrôle par un champ optique desdits moyens d'atténuation.

**14.** Dispositif d'atténuation fabriqué selon le procédé de l'une quelconque des revendications 1 à 13.

**15.** Dispositif d'atténuation d'un signal véhiculé par fibre optique sous la forme d'un signal lumineux, **caractérisé en ce qu'**il comprend une première et une seconde fibres monomodes à coeur optique étendu montés en vis-à-vis dans un capillaire contenant un cristal liquide formant moyens d'atténuation.

**16.** Dispositif d'atténuation selon la revendication 15, **caractérisé en ce qu'**au moins une portion de la périphérie et au moins une portion de l'extrémité de chacune desdites fibres est métallisée.

**17.** Dispositif d'atténuation selon l'une quelconque des revendications 15 et 16, **caractérisé en ce que** les extrémités desdites fibres sont obtenues par fracture.

**18.** Application du dispositif d'atténuation selon l'une quelconque des revendications 14 à 17 et/ou du dispositif d'atténuation fabriqué à l'aide du procédé selon l'une quelconque des revendications 1 à 13, à la mise en oeuvre d'un limiteur de puissance contrôlable par puissance optique.

**19.** Application du dispositif d'atténuation selon l'une quelconque des revendications 14 à 17 et/ou du dispositif d'atténuation fabriqué à l'aide du procédé selon l'une quelconque des revendications 1 à 13, à la mise en oeuvre d'un atténuateur variable contrôlable par tension.

**20.** Système d'atténuation d'au moins un signal véhiculé par fibre optique sous la forme d'un faisceau lumineux, **caractérisé en ce qu'**il comprend au moins deux dispositifs d'atténuation selon l'une quelconque des revendications 14 à 17 et/ou du dispositif d'atténuation fabriqué à l'aide du procédé selon l'une quelconque des revendications 1 à 13, et **en ce que** les fibres desdits au moins deux dispositifs d'atténuation sont disposées en ruban de fibres.

Fig. 1

Ruban
de
fibres

$2 \times \delta$

Fig. 2

Fibre tampon

Fig. 3

41

42

## Fig. 4

Electrodes

51    54    55    55    51    54    52

57    56    52

50

## Fig. 5a

51    54    52    53

57    55

## Fig. 5b

51    54    52

57    56

60

**Fig. 6a**

51    54    52

57    56

60

**Fig. 6b**

54

57    56

**Fig. 7a**

56

60

**Fig. 7b**

54

53

**Fig. 7c**

56

57

50

**Fig. 7d**

**Figure 8a**

**Figure 8b**

**Office européen des brevets**

**RAPPORT DE RECHERCHE EUROPEENNE**

Numéro de la demande

EP 02 36 4009

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | PATENT ABSTRACTS OF JAPAN<br>vol. 1999, no. 05,<br>31 mai 1999 (1999-05-31)<br>& JP 11 052339 A (NIPPON TELEGR<br>&AMP;TELEPH CORP &LT;NTT&GT;),<br>26 février 1999 (1999-02-26)<br>* le document en entier * | 1 | G02B6/26<br>G02F1/1333<br>G02F1/35 |
| A | * idem * | 2,5,11,<br>13 | |
| Y | US 5 691 789 A (FARIS SADEG MUSTAFA ET AL) 25 novembre 1997 (1997-11-25)<br>* colonne 4, ligne 23 - colonne 5, ligne 3 *<br>* colonne 5, ligne 35 *<br>* colonne 6, ligne 13 *<br>* colonne 6, ligne 57 - colonne 7, ligne 3 * | 1 | |
| X | * idem * | 15 | |
| A | * idem * | 6,7 | **DOMAINES TECHNIQUES RECHERCHES (Int.Cl.7)** |
| Y | US 5 015 057 A (BOS PHILIP J ET AL) 14 mai 1991 (1991-05-14)<br>* colonne 1, ligne 54 - colonne 3, ligne 68 *<br>* colonne 4, ligne 31 - ligne 68 *<br>* colonne 5 - colonne 6 *<br>* colonne 7, ligne 1 - ligne 13 *<br>* figures 1-4 * | 1,15 | G02B<br>G02F |
| A | * idem * | 5-7,13,<br>19 | |

-/--

Le présent rapport a été établi pour toutes les revendications

| Lieu de la recherche | Date d'achèvement de la recherche | Examinateur |
|---|---|---|
| LA HAYE | 21 mai 2002 | Mathyssek, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**Office européen des brevets**

## RAPPORT DE RECHERCHE EUROPEENNE

Numéro de la demande

EP 02 36 4009

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y,D | KAZUO SHIRAISHI ET AL: "BEAM EXPANDING FIBER USING THERMAL DIFFUSION OF THE DOPANT" JOURNAL OF LIGHTWAVE TECHNOLOGY, IEEE. NEW YORK, US, vol. 8, no. 8, 1 août 1990 (1990-08-01), pages 1151-1161, XP000174447 ISSN: 0733-8724 * page 1151 - page 1155 * | 1,15 | |
| A | * idem * | 11,12 | |
| A | US 4 505 539 A (AURACHER FRANZ ET AL) 19 mars 1985 (1985-03-19) * figures 12,13 * * colonne 11, ligne 21 - ligne 68 * * colonne 12, ligne 1 - ligne 24 * | 1,2,13, 16 | |
| A | US 6 014 483 A (LOSTEC JEAN ET AL) 11 janvier 2000 (2000-01-11) * colonne 3, ligne 44 - ligne 67 * * colonne 4 - colonne 6 * * colonne 7, ligne 1 - ligne 47 * * figures * | 1,9,10, 17 | DOMAINES TECHNIQUES RECHERCHES (Int.Cl.7) |
| A | US 4 973 125 A (NORMANDIN RICHARD J F) 27 novembre 1990 (1990-11-27) * revendications; figures * | 1,18 | |
| A | US 4 768 864 A (PEPPER DAVID M ET AL) 6 septembre 1988 (1988-09-06) * le document en entier * | 1,18 | |
|  | -/-- | | |

Le présent rapport a été établi pour toutes les revendications

| Lieu de la recherche | Date d'achèvement de la recherche | Examinateur |
|---|---|---|
| LA HAYE | 21 mai 2002 | Mathyssek, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P04C02)

**Office européen
des brevets**

**RAPPORT DE RECHERCHE EUROPEENNE**

Numéro de la demande

EP 02 36 4009

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 00 23833 A (POPOVICH MILAN M ;DIGILENS INC (US)) 27 avril 2000 (2000-04-27) <br> * page 1, ligne 7 - ligne 8 * <br> * page 1, ligne 36 * <br> * page 2, ligne 8 * <br> * page 9, ligne 4 - ligne 13 * <br> * page 11, ligne 33 - page 13, ligne 14 * <br> * page 18, ligne 23 - ligne 29 * <br> * figure 1 * <br><br> --- | 1,5-7 | |
| A,D | TAKIZAWA K ET AL: "POLARIZATION-INDEPENDENT OPTICAL FIBER MODULATOR BY USE OF POLYMER-DISPERSED LIQUID CRYSTALS" APPLIED OPTICS, OPTICAL SOCIETY OF AMERICA,WASHINGTON, US, vol. 37, no. 15, 20 mai 1998 (1998-05-20), pages 3181-3189, XP000765274 ISSN: 0003-6935 * le document en entier * <br><br> ------ | 1,2,5-9, 13-16,19 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 21 mai 2002 | Mathyssek, K |

**ANNEXE AU RAPPORT DE RECHERCHE EUROPEENNE**
**RELATIF A LA DEMANDE DE BREVET EUROPEEN NO.**
EP 02 36 4009

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

21-05-2002

| Document brevet cité au rapport de recherche | | | Date de publication | Membre(s) de la famille de brevet(s) | | Date de publication |
|---|---|---|---|---|---|---|
| JP | 11052339 | A | 26-02-1999 | AUCUN | | |
| US | 5691789 | A | 25-11-1997 | AU | 7601496 A | 22-05-1997 |
| | | | | CN | 1217796 A | 26-05-1999 |
| | | | | EP | 0873537 A1 | 28-10-1998 |
| | | | | JP | 11512849 T | 02-11-1999 |
| | | | | US | 6072549 A | 06-06-2000 |
| | | | | US | 2002039156 A1 | 04-04-2002 |
| | | | | WO | 9716762 A1 | 09-05-1997 |
| | | | | US | 2001003473 A1 | 14-06-2001 |
| | | | | US | 2002041346 A1 | 11-04-2002 |
| | | | | US | 6181395 B1 | 30-01-2001 |
| | | | | US | 6034753 A | 07-03-2000 |
| | | | | US | 6133980 A | 17-10-2000 |
| | | | | US | 5940150 A | 17-08-1999 |
| | | | | US | 2002012766 A1 | 31-01-2002 |
| US | 5015057 | A | 14-05-1991 | JP | 3114022 A | 15-05-1991 |
| US | 4505539 | A | 19-03-1985 | DE | 3138968 A1 | 14-04-1983 |
| | | | | EP | 0075704 A2 | 06-04-1983 |
| | | | | EP | 0306604 A1 | 15-03-1989 |
| | | | | JP | 58130320 A | 03-08-1983 |
| US | 6014483 | A | 11-01-2000 | FR | 2752623 A1 | 27-02-1998 |
| | | | | EP | 0825464 A1 | 25-02-1998 |
| US | 4973125 | A | 27-11-1990 | CA | 1318721 A1 | 01-06-1993 |
| US | 4768864 | A | 06-09-1988 | AUCUN | | |
| WO | 0023833 | A | 27-04-2000 | AU | 1117300 A | 08-05-2000 |
| | | | | WO | 0023833 A1 | 27-04-2000 |

EPO FORM P0460

Pour tout renseignement concernant cette annexe : voir Journal Officiel de l'Office européen des brevets, No.12/82